# EUROPEAN PATENT APPLICATION

(11) **EP 1 531 399 A2**
(43) Date of publication of application: **18.05.2005**
(21) Application number: 04257014.3
(22) Date of filing: 11.11.2004
(51) Int. Cl.: G06F 15/173, H04N 7/26

(54) **Method and system for preventing data transfer bus bottlenecks through image compression**

(30) Priority: 12.11.2003 JP 2003383172
(71) Applicant: Sharp Kabushiki Kaisha, Osaka-shi, Osaka 545-8522 (JP)
(72) Inventor: Obuchi, Yasuji, Kitakatsuragi-gun Nara 636-0022 (JP); Imai, Shigeki, Nara-shi Nara 631-0056 (JP)
(74) Representative: Brown, Kenneth Richard

(57) **Abstract**

An image information processing system is provided, which comprises an image input section for receiving image data, a storage section for storing the image data, and a control section for controlling the image input section and the storage section. The image input section, the storage section and the control section are connected together via a data transfer bus line. An image compression section for compressing the image data is provided within or adjacent to the image input section. The control section controls the image compression section to compress non-compressed image data input from the image input section, transfers the compressed image data via the data transfer bus line to the storage section, and controls the storage section to store the compressed image data.

## Description

### BACKGROUND OF THE INVENTION

### 1. FIELD OF THE INVENTION:

The present invention relates to an image information processing system and an image information processing method for, for example, receiving, outputting (displaying), accumulating (storing), and transmitting/receiving static images or moving images. More particularly, the present invention relates to an image information processing system and method suitable for mobile electronic apparatuses, which are mainly used outdoors and require low power consumption, such as mobile telephones, personal digital assistants (PDAs), digital still cameras, mobile personal computers, and the like.

### 2. DESCRIPTION OF THE RELATED ART:

Conventionally, in the above-described types of image information processing systems, image data input via an image input section (e.g., a CCD camera, a CCD image sensor, etc.) is transferred, without data compression, via a data transfer bus line to a storage section (e.g., an ROM, etc.). The image data is compressed using a computation section (e, g., a central processing unit (CPU), a DSP, etc.), and the resultant compressed image data is stored into the storage section. Also, in order to replay data, compressed image data is read out from the storage section, and the image data is decompressed using the computation section, such as a CPU, a DSP, or the like. The decompressed data is transferred via a system bus line to an image display section, such as a liquid crystal display apparatus or the like, which in turn displays the image data on its display screen. For example, a conventional image information processing system is disclosed in Japanese Laid-Open Publication No. 2002-232680.

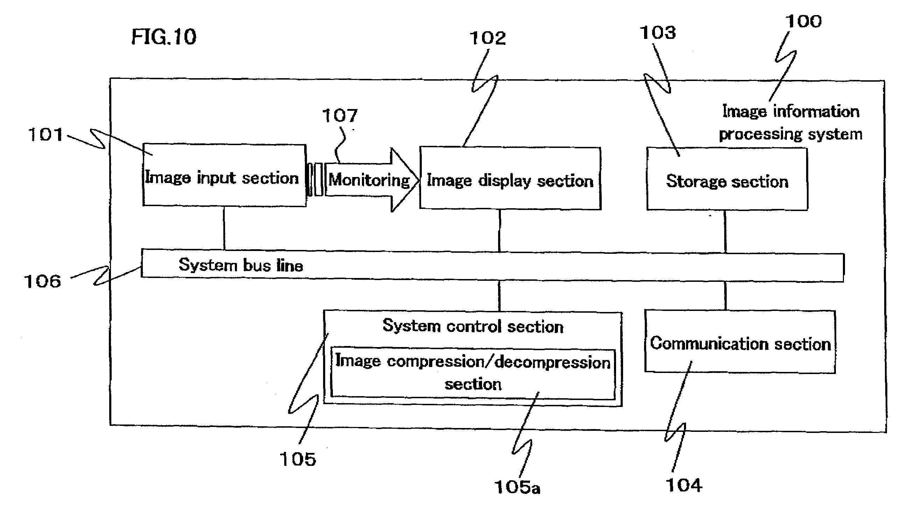

Figure 10 is a block diagram showing an exemplary configuration of a conventional image information processing system.

As shown in Figure 10, in the image information processing system 100, an image input section 101 for receiving an image (e.g., a CCD camera, a CCD image sensor, etc.), an image display section 102 for displaying an image (e.g., a liquid crystal display apparatus, etc.), a storage section 103 for accumulating image data, a communication section 104 for transmitting/receiving image data, and a system control section 105 for controlling each section of the image information processing system 100, are connected to one another via a system bus line 106. Also, the image input section 101 and the image display section 102 are connected to each other via the system bus line 106 as well as a data transfer line 107 which is used for monitor display.

The system control section 105 incorporates an image compression/decompression section 105a for compressing/decompressing image data, which is implemented as a circuit (hardware) or a program (software).

The system bus line 106 is used as a data transfer bus line via which data is transferred, and a control signal bus line via which a control signal is transferred.

The above-described arrangement functions as follows. When an image is taken using the image input section 101 (e.g., a CCD camera, a CCD image sensor, etc.), the captured image data is transferred and accumulated into the storage section 103 via the system bus line 106.

Next, the image data accumulated in the storage section 103 is read out from the storage section 103 in accordance with control by the system control section 105. The image data is compressed by the image compression/decompression section 105a in the system control section 105, and the image data is stored again as compressed image data into the storage section 103. In the image processing system 100, the image compression/decompression section 105a is incorporated in the system control section 105. However, the image compression/ decompress ion section 105a may be separately connected to the system bus line 106. In either case, the image data accumulated in the storage section 103 is compressed by the image compression section in accordance with control by the system control section 105, and the compressed image data is written into the storage section 103.

Image data is replayed as follows. Any image data is selectively read out from compressed image data accumulated in the storage section 103 using the system control section 105.

Next, the read image data is decompressed by the image compression/decompression section 105a, and the resultant data is transferred to the image display section 102 and is displayed on a display screen. Also, the decompressed image data may be temporarily stored in the storage section 103, and then transferred to the image display section 102 for displaying.

The image processing system 100 will be further described, where image data is received.

The communication section 104 generally receives compressed image data. The compressed image data received by the communication section 104 is accumulated in the storage section 103. After the compressed image data is accumulated in the storage section 103, the image is replayed in the manner described above.

As an alternative method for replaying received data, a method called streaming is known. According to the method, image data is transferred to the image compression/decompression section 105a for decompression while the image data is, or is not, accumulated in the storage section 103. Thereafter, the decompressed data is transferred to the image display section 102 for displaying.

When monitor display is performed by the image information processing system 100, the size of the image data from the image input section 101 is resized to fit a display size by, for example, sampling. Thereafter, the image data is transferred via the data transfer line 107 for monitor display to the image display section 102 which in turn displays the image data on a display screen.

Although there are some variations in a method for achieving the above-described functions, the image compression/decompression section 105a, the image input section 101, and the image display section 102 are generally connected to one another via the system bus line 106 in conventional image information processing systems.

In general, non-compressed image data has a size 5 to several tens times larger than that of its compressed image data. Therefore, the amount of data transferred on the conventional system bus line 106 is large, thus creating a bottleneck. The data transfer capacity of the system bus line 106 is generally increased by increasing the width or clock frequency of the bus line. In this case, however, the number of lines or power consumption is increased. In the future, an increasingly larger data transfer capacity is required for the image information processing system 100 to address increases in image size and the amount of moving image processing.

Therefore, in the conventional image information processing system 100, a higher performance system bus line is required as the amount of data transferred on the system bus line 106 is increased.

### SUMMARY OF THE INVENTION

According to an aspect of the present invention, an image information processing system is provided, which comprises an image input section for receiving image data, a storage section for storing the image data, and a control section for controlling the image input section and the storage section. The image input section, the storage section and the control section are connected together via a data transfer bus line. An image compression section for compressing the image data is provided within or adjacent to the image input section. The control section controls the image compression section to compress non-compressed image data input from the image input section, transfers the compressed image data via the data transfer bus line to the storage section, and controls the storage section to store the compressed image data.

According to another aspect of the present invention, an image information processing system is provided, which comprises a storage section for storing image data, an image display section for displaying the image data, and a control section for controlling the storage section and the image display section. The storage section, the image display section and the control section are connected together via a data transfer bus line. An image decompression section for decompressing compressed image data is provided within or adjacent to the image display section. The control section transfers compressed image data stored in the storage section via the data transfer bus line to the image decompression section, controls the image decompression section to decompress the compressed image data, and controls the image display section to display/replay the decompressed image data.

According to another aspect of the present invention, an image information processing system is provided, which comprises an image input section fox receiving image data, a storage section for storing the image data, an image display section for displaying the image data, and a control section for controlling the image input section, the storage section and the image display section. The image input section, the storage section, the image display section and the control section are connected together via a data transfer bus line. An image compression section for compressing the image data is provided within or adjacent to the image input section. An image decompression section for decompressing compressed image data is provided within or adjacent to the image display section. The control section controls the image compression section to compress non-compressed image data input from the image input section, transfers the compressed image data via the data transfer bus line to the storage section, and controls the storage section to store the compressed image data. The control section transfers compressed image data stored in the storage section via the data transfer bus line to the image decompression section, controls the image decompression section to decompress the compressed image data, and controls the image display section to display/replay the decompressed image data.

In one embodiment of the above-described invention, the image compression section has a compression rate predetermined depending on a data transfer rate.

According to another aspect of the present invention, an image information processing system is provided, which comprises an image input /display apparatus including an image input section for receiving image data and an image display section for displaying the image data, a storage section for storing the image data, and a control section for controlling the image input section, the image display section and the storage section. The image input/display apparatus, the storage section and the control section are connected together via a data transfer bus line. An image compression/decompression section for compressing/decompressing the image data is provided within or adjacent to the image input/display apparatus. The control section controls the image compression/decompression section to compress non-compressed image data input from the image input section, transfers the compressed image data via the data transfer bus line to the storage section, and controls the storage section to store the compressed image data. The control section transfers compressed image data stored in the storage section via the data transfer bus line to the image compression/decompression section, controls the image compression/decompression section to decompress the compressed image data, and controls the image display section to display/replay the decompressed image data.

According to another aspect of the present invention, an image information processing system is provided, which comprises an image input /display apparatus including an image input section for receiving image data and an image display section for displaying the image data, and a control section for controlling the image input section and the image display section. An image compression/decompression section for compressing/decompressing the image data is provided within or adjacent to the image input/display apparatus. The control section controls the image compression/decompression section to compress/decompress non-compressed image data input from the image input section and controls the image display section to perform monitor display of the image data.

In one embodiment of this invention, a size of the image data input from the image input section is shaped by compression and decompression of the image data by the image compression/decompression section to fit a display size of the image display section.

In one embodiment of the above- described invention, the image compression/decompression section has a compression rate predetermined depending on a data transfer rate.

According to another aspect of the present invention, an image information processing system is provided, which comprises a storage section for storing an image data, an image display section for displaying the image data, a communication section for transmitting/receiving the image data, and a control section for controlling the storage section, the image display section and the communication section. The storage section, the image display section, the communication section and the control section are connected together via a data transfer bus line. An image decompression section for decompressing compressed image data is provided within or adjacent to the image display section. The control section controls the storage section to store compressed image data received by the communication section, transfers the compressed image data stored in the storage section via the data transfer bus line to the image decompression section, controls the image decompression section to decompress the compressed image data, and controls the image display section to display/replay the decompressed image data.

According to another aspect of the present invention, an image information processing system is provided, which comprises a storage section for storing an image data, an image display section for displaying the image data, a communication section for transmitting/receiving the image data, and a control section for controlling the storage section, the image display section and the communication section. The storage section, the image display section, the communication section and the control section are connected together via a data transfer bus line. An image decompression section for decompressing compressed image data is provided within or adjacent to the image display section. The control section controls the storage section to store compressed image data received by the communication section, and at the same time, transfers the oompressed image data, without storing the compressed image data into the storage section, via the data transfer bus line to the image decompression section, controls the image decompression section to decompress the compressed image data, and controls the image display section to display/replay the decompressed image data.

In one embodiment of the above-described invention, the image compression section performs image compression based on an image compression algorithm requiring a circuit scale or program size smaller than a predetermined one.

In one embodiment of the above-described invention, the image decompression section performs image decompression based on an image decompression algorithm requiring a circuit scale or program size smaller than a predetermined one.

In one embodiment of the above-described invention, the image compression/decompression section performs image compression/decompression based on an image compression/decompression algorithm requiring a circuit scale or program size smaller than a predetermined one.

In one embodiment of the above-described invention, the image compression section includes two or more image compression sections having different image compression algorithms.

In one embodiment of the above-described invention, the image decompression section includes two or more image decompression sections having different image decompression algorithms.

In one embodiment of the above-described invention, the image compression/decompression section includes two or more image compression/decompression sections having different image compression/decompression algorithms.

According to another aspect of the present invention, an image information processing method is provided for an image information processing system. The image information processing system comprises an image input section for receiving image data, a storage section for storing the image data, and a control section for controlling the image input section and the storage section. The image input section, the storage section and the control section are connected together via a data transfer bus line. An image compression section for compressing the image data is provided within or adjacent to the image input section. The method comprises using the control section to control the image compression section to compress non-compressed image data input from the image input section, transfer the compressed image data via the data transfer bus line to the storage section, and control the storage section to store the compressed image data.

According to another aspect of the present invention, an image information processing method is provided for an image information processing system. The image information processing system comprises a storage section for storing image data, an image display section for displaying the image data, and a control section for controlling the storage section and the image display section. The storage section, the image display section and the control section are connected together via a data transfer bus line. An image decompression section for decompressing compressed image data is provided within or adjacent to the image display section. The method comprises using the control section to transfer compressed image data stored in the storage section via the data transfer bus line to the image decompression section, control the image decompression section to decompress the compressed image data, and control the image display section to display/replay the decompressed image data.

According to another aspect of the present invention, an image information processing method is provided for an image information processing system. The image information processing system comprises an image input section for receiving image data, a storage section for storing the image data, an image display section for displaying the image data, and a control section for controlling the image input section, the storage section and the image display section. The image input section, the storage section, the image display section and the control section are connected together via a data transfer bus line. An image compression section for compressing the image data is provided within or adjacent to the image input section. An image decompression section for decompressing compressed image data is provided within or adjacent to the image display section. The method comprises using the control section to control the image compression section to compress non-compressed image data input from the image input section, transfer the compressed image data via the data transfer bus line to the storage section, and control the storage section to store the compressed image data, and using the control section to transfer compressed image data stored in the storage section via the data transfer bus line to the image decompression section, control the image decompression section to decompress the compressed image data, and control the image display section to display/replay the decompressed image data.

According to another aspect of the present invention, an image information processing method is provided for an image information processing system. The image information processing system comprises an image input/display apparatus including an image input section for receiving image data and an image display section for displaying the image data, a storage section for storing the image data, and a control section for controlling the image input section, the image display section and the storage section. The image input/display apparatus, the storage section and the control section are connected together via a data transfer bus line. An image compression/decompression section for compressing/ decompressing the image data is provided within or adjacent to the image input/display apparatus. The method comprises using the control, section to control the image compression/ decompression section to compress non-compressed image data input from the image input section, transfer the compressed image data via the data transfer bus line to the storage section, and control the storage section to store the compressed image data, and using the control section to transfer the compressed image data stored in the storage section via the data transfer bus line to the image compression/decompression section, control the image compression/decompression section to decompress the compressed image data, and control the image display section to display/replay the decompressed image data.

According to another aspect of the present invention, an image information processing method is provided for an image information processing system. The image information processing system comprises an image input/display apparatus including an image input section for receiving image data and an image display section for displaying the image data, and a control section for controlling the image input section and the image display section. An image compression/decompression section for compressing/decompressing the image data is provided within or adjacent to the image input section. The method comprises using the control section to control the image compression/decompression section to compress/decompress non-compressed image data input from the image input section and control the image display section to perform monitor display of the image data.

According to another aspect of the present invention, an image information processing method is provided for an image information processing system. The image information processing system comprises a storage section for storing an image data, an image display section for displaying the image data, a communication section for transmitting/receiving the image data, and a control section for controlling the storage section, the image display section and the communication section. The storage section, the image display section, the communication section and the control section are connected together via a data transfer bus line. An image decompression section for decompressing compressed image data is provided within or adjacent to the image display section. The method comprises using the control section to control the storage section to store compressed image data received by the communication section, transfer the compressed image data stored in the storage section via the data transfer bus line to the image decompression section, control the image decompression section to decompress the compressed image data, and control the image display section to display/replay the decompressed image data.

According to another aspect of the present invention, an image information processing method is provided for an image information processing system. The image information processing system comprises a storage section for storing an image data, an image display section for displaying the image data, a communication section for transmitting/receiving the image data, and a control section for controlling the storage section, the image display section and the communication section. The storage section, the image display section, the communication section and the control section are connected together via a data transfer bus line. An image decompression section for decompressing compressed image data is provided within or adjacent to the image display section. The method comprises using the control section to control the storage section to store compressed image data received by the communication section, and at the same time, transfer the compressed image data, without storing the compressed image data into the storage section, via the data transfer bus line to the image decompression section, control the image decompression section to decompress the compressed image data, and control the image display section to display/replay the decompressed image data.

Functions of the above-described configuration of the present invention will be described below.

In the present invention, attention was paid to the amount of data transferred on a system bus line. By transferring data in a compressed form, the amount of data transferred on the system bus line is reduced. Thereby, power consumption can be lowered and an increase in power consumption can be prevented with a low clock frequency. A larger image size and an increased amount of moving image processing can be handled.

For example, image data input from an image input section (e.g., a CCD camera, a CCD image sensor, etc.) is compressed by an image compression section provided within or adjacent to the image input section before being transferred via a data transfer bus line to a storage section or the like. Thereby, the amount of data which is transferred via the data transfer bus line to the storage section can be reduced when data storage is performed.

When an image is replayed/displayed, compressed image data accumulated in the storage section is transferred without decompression via the data transfer bus line to the image display section (e. g., a liquid crystal display apparatus, etc.) and is decompressed by an image decompression section provided within or adjacent to the image display section. Thereby, the amount of data transferred for image display/replay can be reduced.

By integrating the image compression section with the image decompression section, a common circuit (s) can be shared by the two sections, resulting in a reduction in circuit scale and cost.

By setting an appropriate compression rate depending on a data transfer rate, a data transfer amount and a transfer clock can be reduced, resulting in a reduction in power consumption.

By compressing/decompressing non-compressed image data, which is input from an image input section, using an image compression/decompression section for monitor display, the input image data can be resized to fit a display size of an image display section.

Compressed image data received by a communication section is transferred via a data transfer bus line to an image display section. The compressed image data is decompressed by an image decompression section provided within or adjacent to the image display section. The decompressed image data is displayed/replayed by the image display section. Thereby, the amount of transferred data is reduced when an image is received.

By using an image compression section and an image decompression section based on an algorithm having a small circuit scale or program size, the image compression section and the image decompression section can be easily incorporated into an image input section and an image display section.

By providing two ormore image compression sections and image decompression sections having different algorithms, image data compressed in different manners can be transmitted/received and displayed.

As described above, according to the present invention, since data is transferred in a compressed form, the data transfer amount can be reduced. A transfer time can be reduced in proportion to the reduction of the data transfer amount.

Assuming that data transfer is performed for the same amount of processing time as that for conventional techniques, the processing performance of a data transfer bus line can be increased up to an image size corresponding to the reciprocal of a compression rate. Therefore, the data transfer amount of the data transfer bus line can be increased without increasing the width of a bus line. A larger image size and an increased amount of moving image processing can be handled.

Also, assuming that data transfer is performed for the same amount of processing time as that for conventional techniques, the clock frequency of a data transfer bus line can be increased by a factor corresponding to a compression rate, resulting in a reduction in power consumption in proportion to the operating frequency. This is because the data transfer amount can be reduced by a factor corresponding to the compression rate.

By reducing the clock frequency of a data transfer bus line, a sufficient margin of timing error in the operation can be achieved, thereby making it possible to improve the reliability of the image information processing system.

Thus, the invention described herein makes possible the advantages of providing an image information processing system and an image information processing method, in which the amount of data transferred on a system bus line is reduced, thereby making it possible to use a lower clock frequency to prevent an increase in power consumption, and address increases in image size and the amount of moving image processing.

These and other advantages of the present invention will become apparent to those skilled in the art upon reading and understanding the following detailed description with reference to the accompanying figures.

### BRIEF DESCRIPTION OF THE DRAWINGS

Figure 1 is a block diagram showing an exemplary basic configuration of an image information processing system according to the present invention.
Figure 2 is a block diagram showing a configuration of an image information processing system according to Embodiment 1 of the present invention.
Figure 3 is a block diagram showing a configuration of an image information processing system according to Embodiment 2 of the present invention.
Figure 4 is a block diagram showing a configuration of an image information processing system according to Embodiment 3 of the present invention.
Figure 5 is a block diagram showing a configuration of an image information processing system according to Embodiment 4 of the present invention.
Figure 6 is a block diagram for explaining a process for monitor display in the image information processing system of Figure 5.
Figure 7 is a block diagram showing a configuration of an image information processing system according to Embodiment 5 of the present invention.
Figure 8 is a block diagram showing a configuration of an image information processing system according to Embodiment 6 of the present invention.
Figure 9 is a block diagram showing a variation of the image information processing system of Figure 8.
Figure 10 is a block diagram showing a configuration of a conventional image information processing system.

### DESCRIPTION OF THE PREFERRED EMBODIMENTS

Hereinafter, a basic configuration and Embodiments 1 to 6 of the image processing system of the present invention will be described with reference to the accompanying drawings, where the present invention is applied to a mobile electronic apparatus (e.g., a mobile telephone). Although the image processing system of the present invention is herein applied to a general mobile telephone, the present invention is not limited to this.

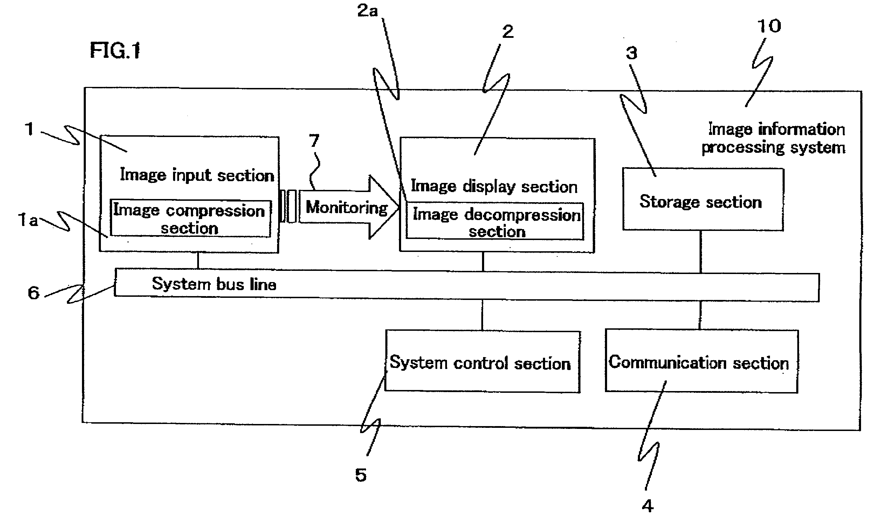

Figure 1 is a block diagram showing an exemplary basic configuration of the image information processing system of the present invention.

As shown in Figure 1, in the image information processing system 10, an image input section 1 for receiving an image (e.g., a CCD camera, a CCD image sensor, etc.), an image display section 2 for displaying an image (e.g., a liquid crystal display apparatus, etc.), a storage section 3 for accumulating image data, a communication section 4 for transmitting/receiving image data, and a system control section 5 for controlling each section of the image information processing system 10, are connected to one another via a system bus line 6 as a data transfer bus line.

The image information processing system 10 is different from the conventional image information processing system 100 of Figure 10 in that the functions of the image compression/decompression section 105a of Figure 10 are separated, i.e., an image compression section 1a is incorporated in the image input section 1 while an image decompression section 2a is incorporated in the image display section 2.

Accordingly, image data input to the image input section 1 can be supplied to the image compression section 1a for data compression, but not via the system bus line 6. Also, compressed image data supplied to the image decompression section 2a is decompressed by the image decompression section 2a, and the decompressed image data can be supplied to the image display section 2, but not via the system bus line 6. The image display section 2 replays/displays the image data on a display screen.

In Table 1 described below, the image information processing system 10 of the present invention of Figure 1 is compared with the conventional image information processing system 100 of Figure 10 in terms of the state of image data transferred on the system bus line 6 (compressed data or non-compressed data) and the number of times of transfer during each of steps of imaging, replay, transmission, and monitoring.

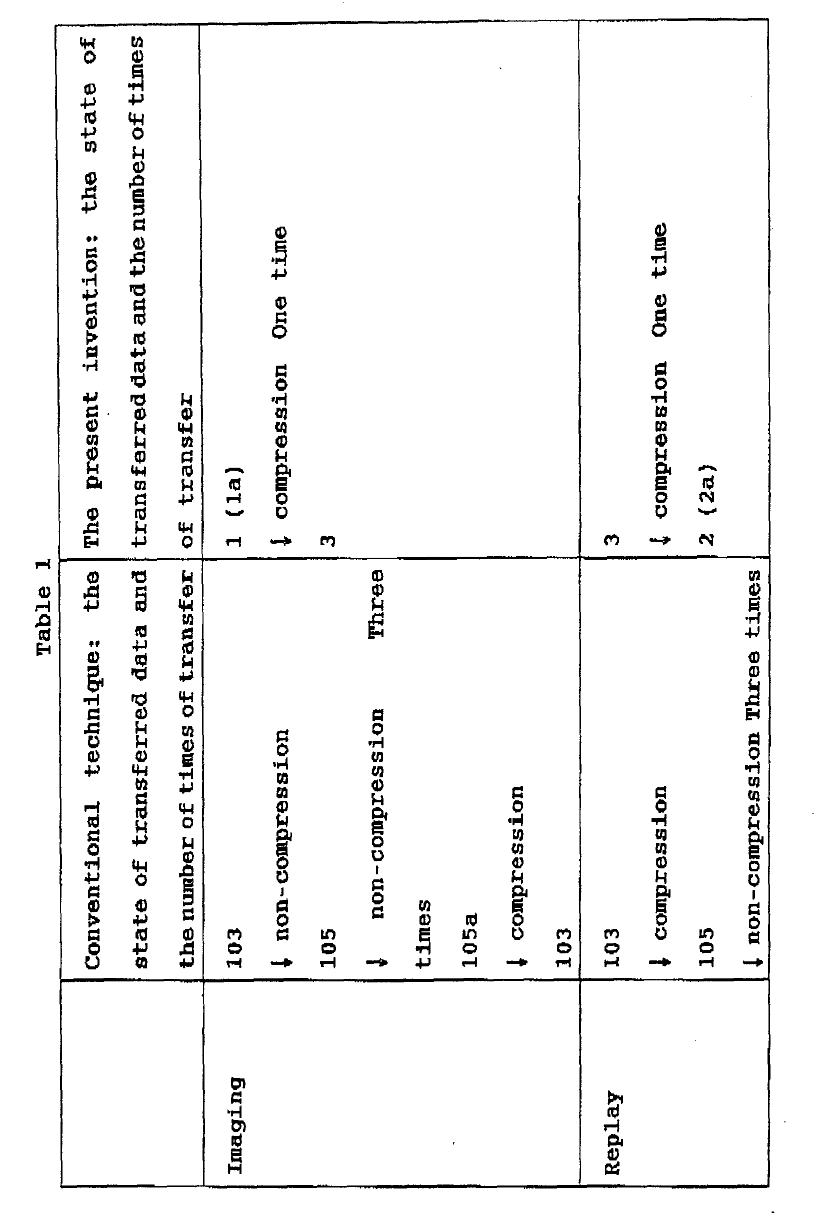

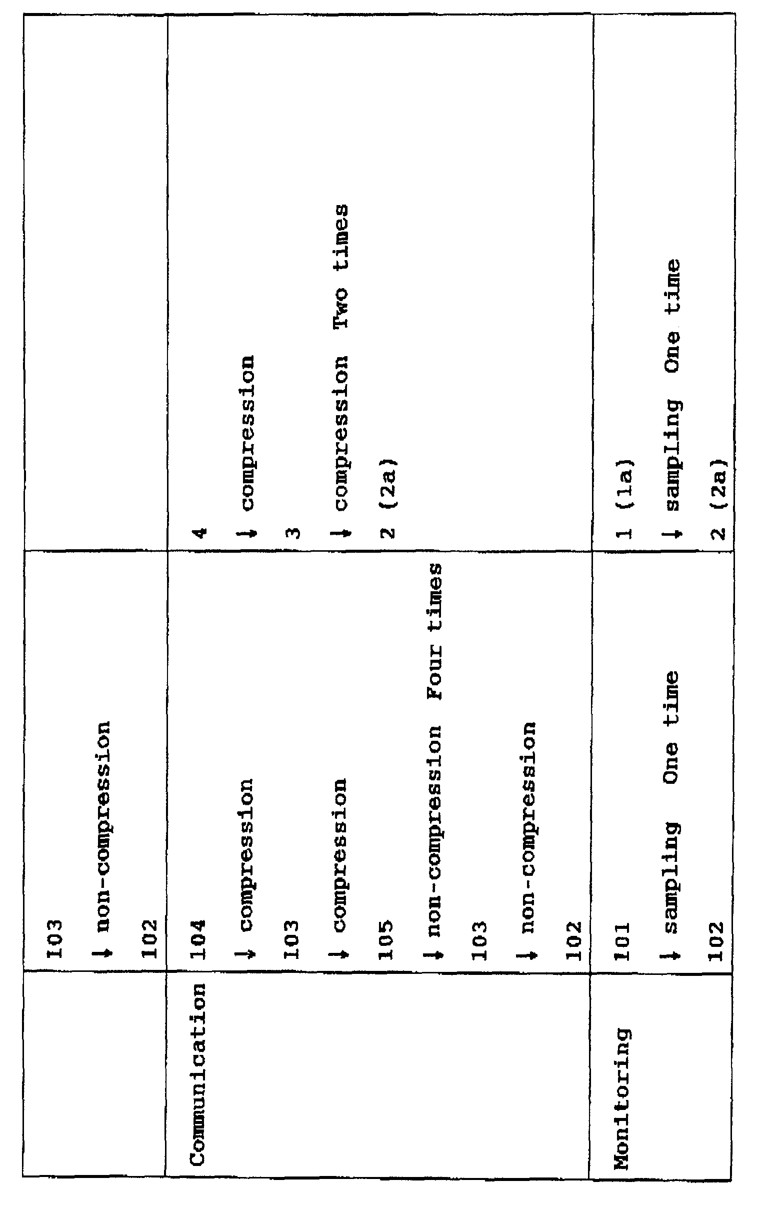

Referring to Table 1, the image information processing system **10** is compared with the conventional image information processing system **100.** Firstly, comparison is made on the image capturing process. In the image information processing system **10** of the present invention of Figure **1,** when an image is taken using the image input section **1** (e.g., a CCD camera, a CCD image sensor, etc.), the captured image data is compressed by the image compression section **1a** and the compressed image data is transferred and accumulated into the storage section **3** via the system bus line **6.** In this case, compressed image data is transfer once via the system bus line **6.**

By contrast, in the conventional image information processing system **100** of Figure **10,** when an image is taken using the image input section **101**, the captured image data is transferred and accumulated into the storage section **103** via the system bus line **106.** The image data accumulated in the storage section **103** is read out from the storage section **103** in accordance with control by the system control section **105.** The image data is compressed by the image compression/decompression section **105a** in the system control section **105**, and the image data is stored as compressed image data into the storage section **103.** In this case, non-compressed image data is transferred twice and compressed image data is transferred once, via the system bus line **106,** i.e., image data is transferred a total of three times.

Next, comparison is made on the replay process. In the image information processing system **10** of the present invention of Figure **1**, images are replayed as follows. Any image data is selectively read out from compressed image data accumulated in the storage section **3** using the system control section **5.** The selected compressed image data is transferred via the system bus line **6** to the image display section **2,** and is decompressed by the image decompression section **2a.** The decompressed image data is displayed on a display screen of the image display section **2.** In this case, compressed image data is transferred only once via the system bus line **6.**

By contrast, in the conventional image information processing system **100** of Figure **10,** images are replayed as follows. Any image data is selectively read out from compressed image data accumulated in the storage section **103** using the system control section **105.** The selected image data is decompressed by the image compression/decompression section **105a,** and the decompressed image data is transferred to the image display section **102** for displaying. Also, the decompressed image data may be temporarily stored in the storage section **103,** and thereafter, may be transferred to the image display section **102.** In this case, non-compressed image data is transferred twice and compressed image data is transferred once, via the system bus line **106,** i.e., image data is transferred a total of three times.

Next, comparison is made on the communication process. In the image information processing system of the present invention **10** of Figure **1,** compressed image data is input to the communication section **4,** and thereafter, the image data is accumulated in the storage section **3.** After the image data is accumulated in the storage section **3,** the image data is replayed in the manner described above. In this case, compressed image data is transferred twice via the system bus line **6.** Alternatively, a method called streaming may be used. According to this method, image data is transferred to the image decompression section **2a** for decompression while the image data is, or is not, accumulated in the storage section **3.** Thereafter, the decompressed data is transferred to the image display section **2** for displaying it on a display screen thereof. In this case, compressed image data is transferred once via the system bus line **6.**

By contrast, in the conventional image information processing system **100** of Figure **10,** when compressed image data is received by the communication section **104,** the compressed image data is accumulated in the storage section **103.** After the image data is accumulated in the storage section **103,** the image data is replayed in the manner described above. In this case, non-compressed image data is transferred twice and compressed image data is transferred twice, via the system bus line **106,** i.e., image data is transferred a total of four times. Alternatively, a method called streaming may be used. According to this method, image data is transferred to the image compression/decompression section 105a for decompression while the image data is, or is not, accumulated in the storage section **103.** Thereafter, the decompressed data is transferred to the image display section **102** for displaying it on a display screen thereof.

Further, comparison is made on the monitor process. In the image information processing system **10** of Figure **1**, monitor display is performed as follows. A size of image data from the image input section **1** is resized to fit a display size by, for example, sampling. Thereafter, the image data is transferred via the data transfer line **7** for monitor display to the image display section **102** which in turn displays the image data on a display screen. In this case, sampling image data is transferred once via the data transfer line **7.** The resizing can be achieved by utilizing compression and decompression of image data by the image compression section **1a** and the image decompression section **2a.** In this case, compressed image data is transferred once via the system bus line **6.**

By contrast, in the conventional image information processing system **100** of Figure **10,** monitor display is performed as follows. The size of the image data from the image input section **101** is resided to fit a display size by, for example, sampling. Thereafter, the image data is transferred via the data transfer line **107** for monitor display to the image display section **102** which in turn displays the image data on a display screen. In this case, sampling image data is transferred once via the data transfer line **107.**

The compression rate of a compression technique commonly used in image information processing systems is shown in Table 2 below.

**Table 2**

| | Compression rate | Standard compression rate |
|---|---|---|
| JPEG (still image) | 1/5 to 1/30 | 1/10 |
| MPEG4 (moving image) | 1/10 to 1/50 | 1/30 |

In Table 2, a standard compression rate, which is practically used where a certain level of image quality is secured, is optionally used herein as a compression/decompression rate. For example, static images are compressed at a compression rate of 1/5 to 1/30 using JPEG, and moving images are compressed at a compression rate of 1/10 to 1/50 using MPEG4.

The above-described compression rate can be considered as a transfer load ratio of non-compressed data and compressed data. Therefore, it is understood that the transfer load can be significantly reduced by transferring compressed image data via the system bus line 6, but not non-compressed image data.

Hereinafter, the image information processing system 10 of the present invention and the image information processing method used in the system will be described in detail by way of specific embodiments (Embodiments 1 to 6).

### (Embodiment 1)

Embodiment 1 of the present invention will be described below, where input non-compressed image data is compressed, the compressed image data is transferred and stored in a storage section 3 via a system bus line 6.

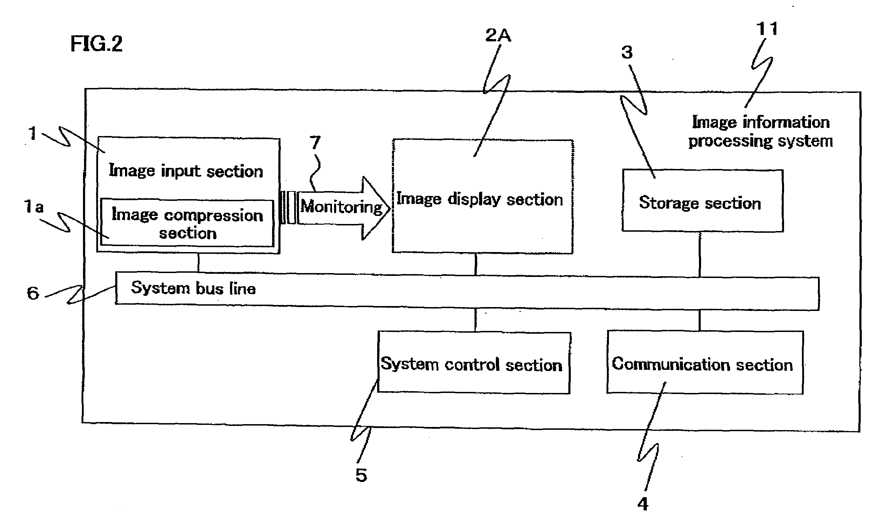

Figure **2** is a block diagram showing a configuration of an image information processing system according to Embodiment 1 of the present invention.

As shown in Figure **2**, in the image information processing system **11**, an image input section **1** for receiving an image (e.g., a CCD camera, a CCD image sensor, etc.), an image display section **2A** for displaying an image (e.g., a liquid crystal display apparatus, etc.), a storage section **3** for accumulating image data, a communication section **4** for transmitting/receiving image data, and a system control section **6** for controlling each section of the image information processing system **11**, are connected to one another via a system bus line **6** as a data transfer bus line.

The image input section **1** incorporates an image compression section **1a,** via which compressed image data is input from the image input section **1** onto the system bus line **6.**

In the image information processing system **11**, image data taken by the image input section **1** is compressed before being output onto the system bus line **6.** Thereafter, the image data is accumulated in the storage section **3**. Therefore, the amount of data transferred on the system bus line **6** is reduced by a factor corresponding to a compression rate as shown in Table 2, i.e., can be significantly reduced.

Thus, by reducing the amount of data transferred on the system bus line **6,** a transfer time can be reduced in proportion to a reduction in the data amount. At this point, the image information processing system **11** is different from the conventional image information processing system **100** in which non-compressed image data is transferred on the system bus line **6.** Note that comparison is made under the same operating environment.

Assuming that data transfer is performed for the same time for both the system of the present invention and conventional systems, the processing performance of the system bus line **6** can be increased up to an image size corresponding to the reciprocal of a compression rate as shown in Table 2. For example, if the compression rate is 1/10, data having an image size 10 times than that of the conventional image information processing system **100** can be transferred for the same length of time.

When a data transfer amount which is reduced corresponding to a compression rate as shown in Table 2 is transferred for the same amount of processing time as that for conventional systems, the clock frequency of the system bus line **6** can be decreased by a factor corresponding to the compression rate. As a result, power consumption can be reduced in proportion to the operating frequency.

By reducing the clock frequency of the system bus line **6**, a sufficient margin of timing error in the operation can be achieved, thereby making it possible to improve the reliability of the image information processing system **11**.

Although not particularly explained herein, an image decompression section (not shown) may be provided in either the image display section **2A** or the system control section **5**, or alternatively, does not have to be provided in the image information processing system **11**. The image display section **2A** and the communication section **4** are not particularly used in the image information processing system **11**, and do not have to be provided in Figure **2**.

### (Embodiment 2)

Embodiment 2 of the present invention will be described below, where stored compressed image data is transferred via a system bus line **6** to an image decompression section, which in turn decompresses the data for replaying/displaying.

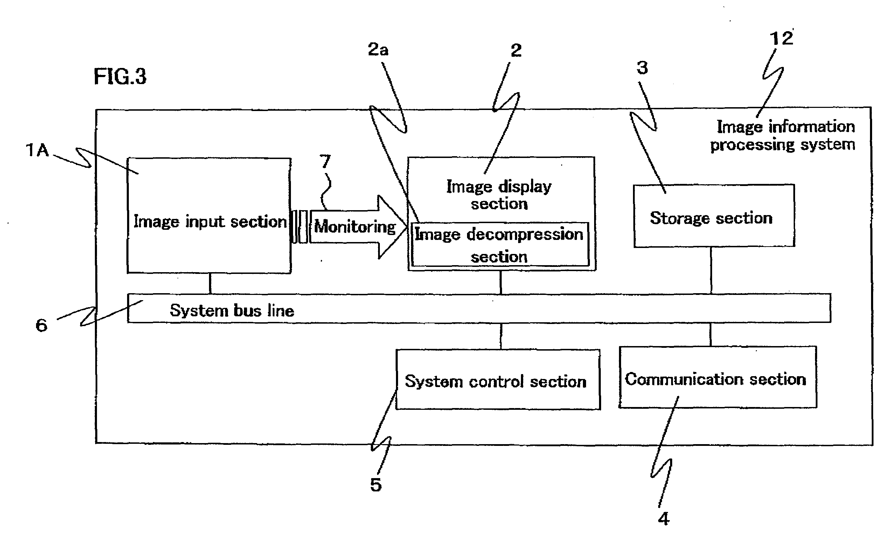

Figure **3** is a block diagram showing a configuration of an image information processing system according to Embodiment 2 of the present invention.

As shown in Figure **3**, in the image information processing system **12**, an image input section **1A** for receiving an image (e.g., a CCD camera, a CCD image sensor, etc.), an image display section **2** for displaying an image (e.g., a liquid crystal display apparatus, etc.), a storage section **3** for accumulating image data, a communication section **4** for transmitting/receiving image data, and a system control section **5** for controlling each section of the image information processing system **12**, are connected to one another via a system bus line **6** as a data transfer bus line.

The image display section **2** incorporates an image decompression section **2a**, which receives compressed image data via the system bus line **6** and decompresses it for replaying/displaying.

In the image information processing system **12**, compressed image data accumulated in the storage section **3** is input onto the system bus line **6** without decompression. The compressed image data is decompressed by the image decompression section **2a**, and is replayed/displayed by the image display section **2**. Therefore, the amount of data transferred on the system bus line **6** can be significantly reduced.

Thus, by reducing the amount of data transferred on the system bus line **6**, a transfer time can be reduced as described in Embodiment 1, resulting in a reduction in power consumption. Assuming that data transfer is performed for the same amount of processing time for both the system of Embodiment 2 and conventional systems, the processing performance of the system bus line **6** can be increased, resulting in a reduction in power consumption. Further, the clock frequency of the system bus line **6** can be reduced, resulting in an improvement in the reliability of the image information processing system **12**.

The display size of the image display section **2** is often smaller than the size of an image stored in the storage section **3**. The data transfer amount of thumbnail display images can also be reduced in proportion to the compression rate, and therefore, a reduction in data transfer amount can be increased, though the reduction is not larger than when an image is input.

Although not particularly explained herein, an image compression section (not shown) may be provided in either the image input section **1A** or the system control section **5**, or alternatively, does not have to be provided in the image information processing system **12**. The image input section **1A** and the communication section **4** are not particularly used in the image information processing system **12**, and do not have to be provided in Figure **3**.

### (Embodiment 3)

Embodiment 3 of the present invention will be described below. In Embodiment 3, input non-compressed image data is compressed, and the compressed image data is transferred via a system bus line **6** to a storage section **3** and is stored in the storage section **3**. Further, the stored compressed image data is transferred via the system bus line **6** to an image decompression section, which in turn decompresses the data for displaying/replaying.

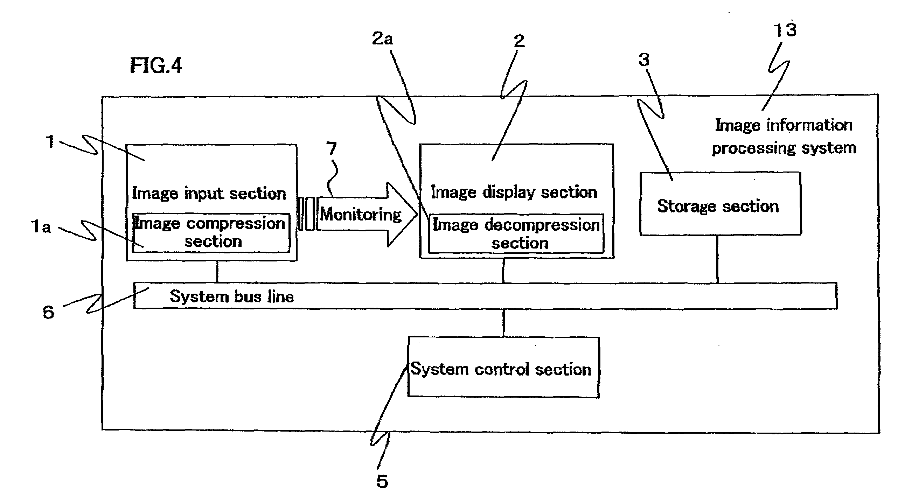

Figure **4** is a block diagram showing a configuration of an image information processing system according to Embodiment 3 of the present invention.

As shown in Figure **4**, in the image information processing system **13**, an image input section **1** for receiving an image (e.g., a CCD camera, a CCD image sensor, etc.), an image display section **2** for displaying an image (e.g., a liquid crystal display apparatus, etc.), a storage section **3** for accumulating image data, and a system control section **5** for controlling each section of the image information processing system **13**, are connected to one another via a system bus line **6** as a data transfer bus line.

As in the above-described Embodiment 1, the image input section **1** incorporates an image compression section **1a**. Also, as in the above-described Embodiment 2, the image display section **2** incorporates an image decompression section **2a**.

Similar to Embodiment 1, in the image information processing system **13**, image data taken by the image input section **1** is compressed before being output onto the system bus line **6**, and thereafter, is accumulated in the storage section **3**. Therefore, the amount of data transferred on the system bus line **6** can be significantly reduced by a factor corresponding to the compression rate as shown in Table 2.

In the image information processing system **13**, comprised image data accumulated in the storage section **3** is input onto the system bus line **6** without decompression as in Embodiment 2. The compressed image data is decompressed by the image decompression section **2a**, and is replayed/displayed by the image display section **2a**. Therefore, the amount of data transferred on the system bus line **6** can be significantly reduced.

Thus, by reducing the amount of data transferred on the system bus line **6**, a transfer time can be reduced as described in Embodiment 1, resulting in a reduction in power consumption. Assuming that data transfer is performed for the same amount of processing time for both the system of Embodiment 3 and conventional systems, the processing performance of the system bus line **6** can be increased, resulting in a reduction in power consumption. Further, the clock frequency of the system bus line **6** can be reduced, resulting in an improvement in the reliability of the image information processing system **13**.

An image information processing system (image display processing system), such as a surveillance camera or the like, can be achieved by incorporating the image compression section **1a** in the image input section **1** as in Embodiment 1 or by providing the image compression section **1a** adjacent to the image input section **1**. Also, an image information processing system (image display processing system), such as an internet viewer or the like, can be achieved by incorporating the image decompression section **2a** in the image display section **2** as in Embodiment **2** or by providing the image decompression section **2a** adjacent to the image display section **2**. Also, an image information processing system (image input/output processing system), such as a mobile telephone with a built-in camera or the like, can be achieved by providing the image compression section **1a** within or adjacent to the image input section **1** and by providing the image decompression section **2a** within or adjacent to the image display section **2** as in Embodiment 3.

Note that the communication section **4** is not particularly used in Embodiment 3, and does not have to be provided in Figure **4**.

### (Embodiment 4)

An image information processing system according to Embodiment 4 of the present invention will be described below, which comprises an image compression/decompression section having an image data compression function and an image data decompression function.

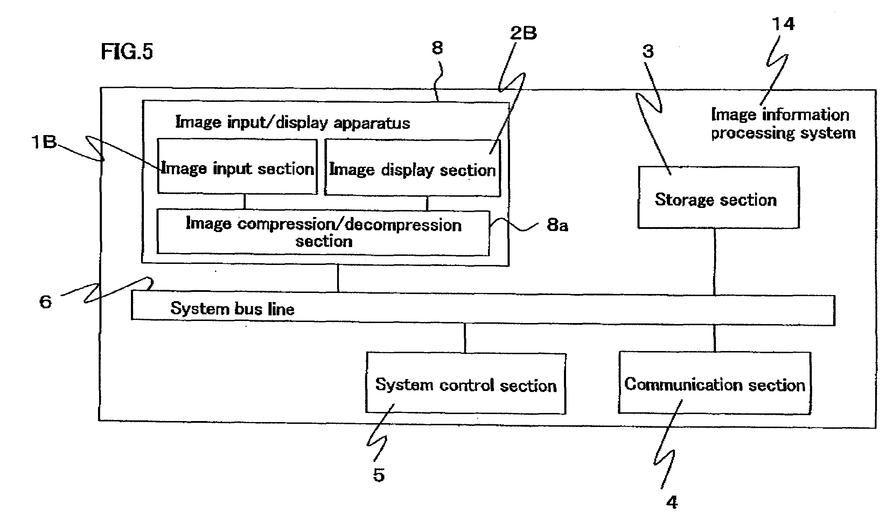

Figure **5** is a block diagram showing a configuration of the image information processing system according to Embodiment 4 of the present invention.

As shown in Figure **5**, in the image information processing system **14**, an image input/display apparatus **8** having an image input section **1B** for receiving an image (e.g., a CCD camera, a CCD image sensor, etc.) and an image display section **2B** for displaying an image (e.g., a liquid crystal display apparatus, etc.), a storage section **3** for accumulating image data, a communication section **4** for transmitting/receiving image data, and a system control section **5** for controlling each section of the image information processing system **14**, are connected to one another via a system bus line **6** as a data transfer bus line.

The image input/display apparatus **8** incorporates an image compression/decompression section **8a**, into which functions of an image compression section and an image decompression section are integrated and which is provided adjacent to the image input section **1** and the image display section **2**.

Thus, the image compression/decompression section **8a** has the integrated functions of the image compression section and the image decompression section. Therefore, a common circuit (s) can be shared by the two sections, resulting in a reduction in circuit size and cost. For example, the two sections can share a connection to the system bus line **6** and can be integrated with a frame memory or the like. It will be clearly understood that the image compression section and the image decompression section are preferably separated in a full duplex system (e.g., a television telephone, etc.), in which both image input and image display are performed simultaneously, as in Embodiment 3.

In the image information processing system **14** of Embodiment 4, image data which is transferred on the system bus line **6** is necessarily compressed image data, thereby making it possible to reduce the amount of data transferred on the system bus line **6** significantly.

Thus, by reducing the amount of data transferred on the system bus line **6**, a transfer time can be reduced as described in Embodiment 1, resulting in a reduction in power consumption. Assuming that data transfer is performed for the same amount of processing time for both the system of Embodiment 4 and conventional systems, the processing performance of the system bus line **6** can be increased, resulting in a reduction in power consumption. Further, the clock frequency of the system bus line **6** can be reduced, resulting in an improvement in the reliability of the image information processing system **12**. The degree of freedom of design is increased when the clock frequency is determined while considering the efficiency of the whole system.

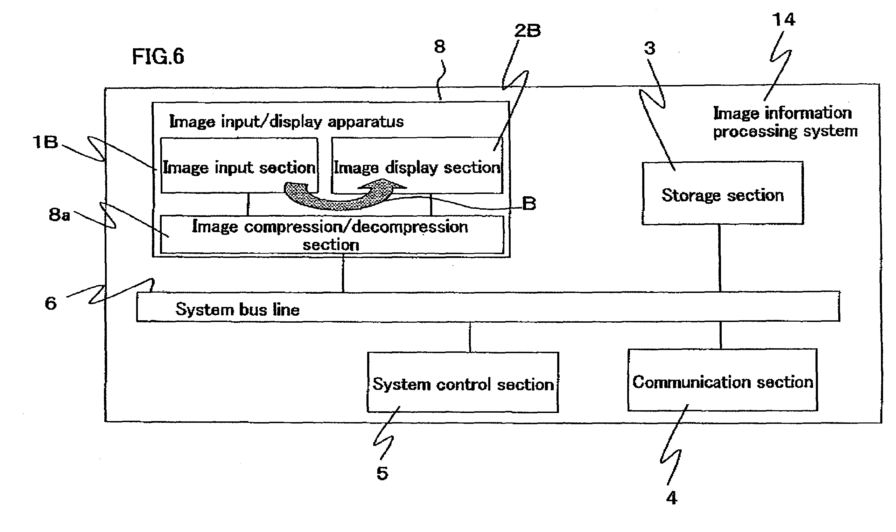

A process of the image information processing system **14** of Embodiment 4 will be described with reference to Figure **6**, where monitor display is performed.

In the conventional image information processing system **100** of Figure **10**, a data transfer line **107** for monitor display is provided between the image input section **101** and the image display section **102**. In this case, image data input from the image input section **101** is shaped (resized) by sampling to fit the display size of the image display emotion **102**, thereby improving the efficiency of monitor display.

By contrast, in the image information processing system **14** of Embodiment 4, a compression rate which is adapted to fit the size of input image and the size of displayed image is determined using the image compression/decompression section **8a** adjacent to an image input section **1B** and an image display section **2B**. As a result, image data input from the image input section **1B** is shaped (resized) by the image compression/decompression section **8a** as indicated by arrow **B** to fit the display size of the image display section **2B**. The resized image data is supplied to the image display section **2B**. As a result, a transfer rate (clock frequency) from the image input section **1B** to the image display section **2B** can be made constant, thereby making it possible to support an image information processing system which handles input or output (displayed) images having different sizes where the bus lines have the same specification.

Table 3 below shows an example where different image sizes are handled.

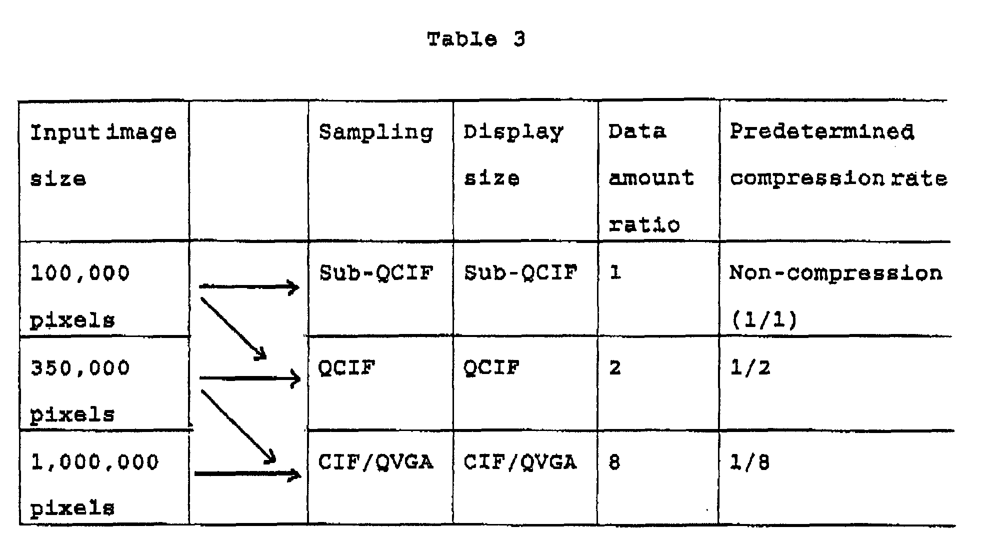

As shown in Table 3, for example, when the size of input image is 100,000 pixels and the display size is sub-QCIF (Quarter Common Intermediate Format), the data amount ratio is 1/1. In this case, image data is not compressed and the compression rate is set to 1/1. Alternatively, when the size of input image size is 100,000 pixels and the display size is QCIF, the data amount ratio is 2. In this case, the compression rate of image data is set to 1/2. Alternatively, when the size of input image is 350,000 pixels and the display size is QCIF, the data amount ratio is 2. In this case, the compression rate of image data is set to 1/2. Alternatively, when the size of input image is 350,000 pixels and the display size is CIF/QVGA (Common Intermediate Frequency/Quarter Video Graphics Array), the data amount ratio is 8. In this case, the compression rate of image data is set to 1/8. Alternatively, when the size of input image is 1,000,000 pixels and the display size is CIF/QVGA, the data amount ratio is 8. In this case, the compression rate of image data is 1/8.

By setting the compression rate as shown in Table 3, image data input from the image input section **1B** can be resized to fit the display size of the image display section **2B**.

In the foregoing description, image data is transferred at a constant transfer rate. It will be clearly understood that when image data having a constant display size is transferred, the clock frequency of a bus line can be reduced depending on the compression rate, resulting in a reduction in power consumption.

### (Embodiment 5)

In Embodiment 5 of the present invention, an information processing system, which transmits/receives an image to/from the communication section **4**, will be described.

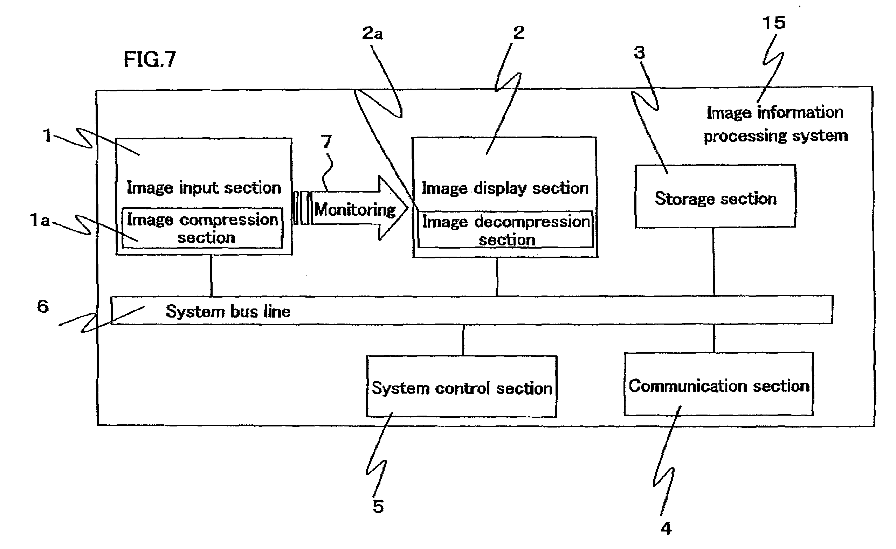

Figure **7** is a block diagram showing a configuration of the image information processing system of Embodiment 5.

As shown in Figure **7**, in the image information processing system **15**, an image input section **1** for receiving an image (e.g., a CCD camera, a CCD image sensor, etc.), an image display section **2** for displaying an image (e.g., a liquid crystal display apparatus, etc.), a storage section **3** for accumulating image data, a communication section **4** for transmitting/receiving image data, and a system control section **5** for controlling each section of the image information processing system **15**, are connected to one another via a system bus line **6** as a data transfer bus line.

Similar to the above-described Embodiment 3, an image compression section **1a** is incorporated into the image input section **1** while an image decompression section **2a** is incorporated into the image display section **2**.

Data transmitted/received to/from the communication section **4** is generally compressed data in order to reduce communication cost. Received compressed data is accumulated in the storage section **3** before replaying and the like. Similar to the above-described Embodiments 1 to 4, all data are transferred as compressed data on the system bus line **6**. Therefore, the same effects as described in Embodiments 1 to 4 can be obtained.

Hereinafter, particularly, a process will be described, which is performed when image data is received using a technique called streaming. In the streaming technique, received image data is displayed without any treatment on the image display section **2**.

In the image information processing system **15**, compressed image data received by the communication section **4** is transferred directly to the image display section **2**, is decompressed by the image decompression section **2a** incorporated in the image display section **2**, and is replayed/displayed on the image display section **2**.

By contrast, in the conventional image information processing system **100** of Figure **10**, compressed data received by the communication section **104** is transferred to the image compression/decompression section **105a** of the system control section **105**, which in turn performs data decompression. A large amount of decompressed image data is transferred via the system bus line **106** to the image display section **102**. Therefore, as compared to the image information processing system **15**, the data transfer amount of the system bus line **6** is increased, resulting in a lower transfer rate. For this reason, for example, it will be clearly understood that the conventional image information processing system **100** can handle only a smaller number of replay frames or a smaller image size.

The above-described image information processing system **11** to **15** of Embodiments 1 to 5 can be integrated with existing circuits by using an image compression/decompression algorithm which requires a small circuit scale or program size. Therefore, for example, an image compression section can be provided adjacent to or within an existing image input section. In addition, an image decompression section can be provided adjacent to or within an existing image display section.

An example of such an image compression algorithm having a small circuit scale includes DMNA (Digital Media New Algorithm, produced by Techno Mathematical Co., Ltd.). When a MPEG4-compatible moving image is compressed, the DMNA can reduce significantly the amount of computation, such as DCT calculation or the like. The same performance can be achieved with a circuit scale about 1/3 of that of conventional MPEG4 image compression techniques.

Conventionally, for example, since MPEG4 requires a large circuit scale, an image compression algorithm has been usually incorporated into a separate LSI. With the above-described image compression technique requiring a small circuit scale, however, the image compression section **1a** can be integrated with the image input section **1** into an integrated LSI. Also, in an image display the image display section **2** and the image decompression section **2a** can be easily integrated together. Particularly, the image compression/decompression algorithm having a small circuit scale or program size is very useful when the image compression section **1a** and the image decompression section **2a** are integrated together as the image compression/decompression section **8a** which is provided adjacent to or within the image input section **1** and the image display section **2** as shown in Figure **5**.

### (Embodiment 6)

In Embodiment 6 of the present invention, an image information processing system will be described, which comprises two or more decompression sections based on different image compression/decompression algorithms requiring a small circuit scale or program size.

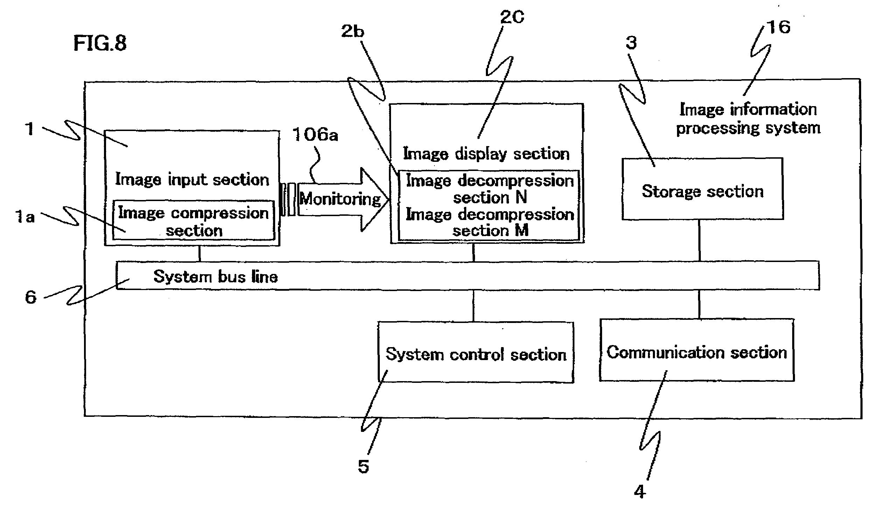

Figure **8** is a block diagram showing a configuration of the image information processing system of Embodiment 6.

As shown in Figure **8**, in the image information processing system **16** of Embodiment 6, an image input section **101** for receiving an image (e.g., a CCD camera, a CCD image sensor, etc.), an image display section **2C** for displaying an image (e.g., a liquid crystal display apparatus, etc.), a storage section **3** for accumulating image data, a communication section **4** for transmitting/receiving image data, and a system control section **5** for controlling each section of the image information processing system **16**, are connected to one another via a system bus line **6** as a data transfer bus line.

Similar to the above-deecribed Embodiment 1, an image compression section **1a** is incorporated into the image input section **1**. Further, an image decompression section **2b** comprising two image decompression sections N and M having different algorithms is incorporated into the image display section **2C**.

In addition to the above-described DMNA, there is an algorithm for image compression/decomposition requiring a small circuit scale, such as NANCY image compression technique (produced by Office NOA, Inc.) using SMSP (Structured Meta Scale Polygon) algorithm. NANCY is often used for moving image processing in mobile telephone apparatuses.

By using the above-described DMNA or SMSP algorithm in the image decompression section **2b**, for example, image compression/decompression is performed based on DMNA in the image compression section **1a** and the image decompression section N, while compressed image is decompressed using SMSP algorithm received from the communication section **4** in the image decompression section M and is replayed/displayed on the image display section **2**.

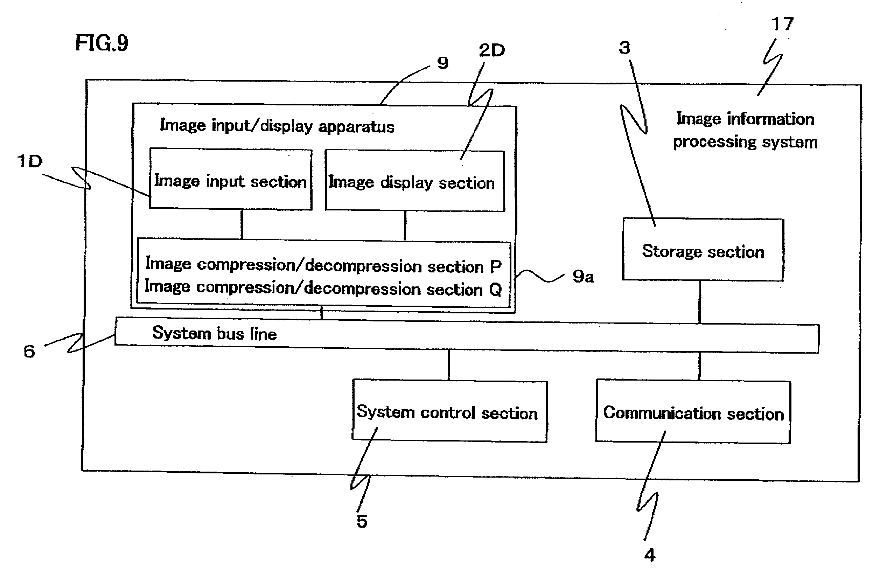

Figure **9** shows an image information processing system **17**, which is a variation of the image information processing system **16** of Embodiment 6. In this image information processing system **17**, an image compression/decompression section **9a** comprising image compression/decompression sections P and Q based on different algorithms is incorporated into the image input/display apparatus **9**, being provided adjacent to or within an image input section **1D** and an image display section **2D**.

In the image information processing system **17**, image compressed data based on two different compression techniques can be received and displayed and compression techniques for images to be transmitted can be selected. Therefore, image data which is compressed using a compression method suitable for an image compression section at the receiver side, can be transmitted. Further, it will be clearly understood that the image information processing system **17** can perform a function as a converter for conversion of compression techniques.

Thus, according to the above-described Embodiments 1 to 6, the image input section **1**, the image display section **2**, the storage section **3**, the communication section **4**, and the system control section **5** are connected together via the system bus line **6**. Non-compressed image data input from the image input section **1** is compressed in the image compression section **1a** which is provided within or adjacent to the image input section **1**, and is transferred via the system bus line **6** to the storage section **3**. The compressed image data accumulated in the storage section **3** is transferred via the system bus line **6** to the image decompression section **2a**, which in turn decompresses the data. The decompressed data is displayed/replayed on the image display section **2**. Thereby, it is possible to prevent an increase in power consumption with a low clock frequency, so that a larger image size and an increased amount of moving image processing can be handled.

Note that the image compression section and the image decompression section are based on algorithms having a circuit scale or a program size smaller than a predetermined value. Therefore, the image compression section and the image decompression section can be easily incorporated into the image display section and the image input section. The size smaller than the predetermined value will be described below. When the size is smaller than the predetermined value, the small program size and circuit scale make it easier to develop an LSI into which other modules are integrated. Although conventional MPEG4 requires about 500,000 gates, MPEG4 using DMNA requires about 1/3 of that circuit scale. Note that a larger LSI can incorporate conventional MPEG4.

In Figure **8**, the two image decompression sections N and M based on different image decompression algorithms are provided. In addition to the image decompression sections N and M, an image decompression section L may be provided based on an image decompression algorithm different from the above-described image decompression algorithms. Thus, two or more image decompression sections having different image decompression algorithms can be provided. Also, two or more image compression sections having different image compression algorithms can be provided in Figure **8**.

The present invention can provide an image information processing system comprising an image input section, an image display section, an image data storage section, and an image data communication section, which can reduce a transfer time in proportion to a reduction in a data transfer amount, resulting in a reduction in power consumption. Assuming that data transfer is performed for the same amount of processing time as that for conventional techniques, the data transfer amount of the data transfer bus line can be increased by a factor corresponding to a compression rate without increasing the width of a bus line. Also, assuming that data transfer is performed for the same amount of processing time as that for conventional techniques, the clock frequency of the data transfer bus line can be increased by a factor corresponding to a compression rate, resulting in a reduction in power consumption in proportion to the operating frequency. By reducing the clock frequency of the data transfer bus line, a sufficient margin of timing error in the operation can be achieved, thereby making it possible to improve the reliability of the image information processing system.

The present invention can be preferably applied to electronic apparatuses requiring low power consumption, such as mobile telephones, mobile personal digital assistants (PDAs), digital still cameras, mobile personal computers, and the like. Thus, the present invention significantly contributes to a reduction in the power consumption and an improvement in the reliability of these apparatuses.

Although certain preferred embodiments have been described herein, it is not intended that such embodiments be construed as limitations on the scope of the invention except as set forth in the appended claims. Various other modifications and equivalents will be apparent to and can be readily made by those skilled in the art, after reading the description herein, without departing from the scope and spirit of this invention. All patents, published patent applications and publications cited herein are incorporated by reference as if set forth fully herein.

## Claims

1. An image information processing system, comprising:
an image input section for receiving image data;
a storage section for storing the image data; and
a control section for controlling the image input section and the storage section,
wherein the image input section, the storage section and the control section are connected together via a data transfer bus line,
an image compression section for compressing the image data is provided within or adjacent to the image input section, and
the control section controls the image compression section to compress non-compressed image data input from the image input section, transfers the compressed image data via the data transfer bus line to the storage section, and controls the storage section to store the compressed image data.

2. An image information processing system, comprising:
a storage section for storing image data;
an image display section for displaying the image data; and
a control section for controlling the storage section and the image display section,
wherein the storage section, the image display section and the control section are connected together via a data transfer bus line,
an image decompression section for decompressing compressed image data is provided within or adjacent to the image display section, and
the control section transfers compressed image data stored in the storage section via the data transfer bus line to the image decompression section, controls the image decompression section to decompress the compressed image data, and controls the image display section to display/replay the decompressed image data.

3. An image information processing system, comprising:
an image input section for receiving image data;
a storage section for storing the image data;
an image display section for displaying the image data; and
a control section for controlling the image input section, the storage section and the image display section,
wherein the image input section, the storage section, the image display section and the control section are connected together via a data transfer bus line,
an image compression section for compressing the image data is provided within or adjacent to the image input section,
an image decompression section for decompressing compressed image data is provided within or adjacent to the image display section,
the control section controls the image compression section to compress non-compressed image data input from the image input section, transfers the compressed image data via the data transfer bus line to the storage section, and controls the storage section to store the compressed image data, and
the control section transfers compressed image data stored in the storage section via the data transfer bus line to the image decompression section, controls the image decompression section to decompress the compressed image data, and controls the image display section to display/replay the decompressed image data.

4. An image information processing system according to claim 1 or 3, wherein the image compression section has a compression rate predetermined depending on a data transfer rate.

5. An image information processing system, comprising:
an image input/display apparatus including:
an image input section for receiving image data; and
an image display section for displaying the image data;
a storage section for storing the image data; and
a control section for controlling the image input section, the image display section and the storage section,
wherein the image input/display apparatus, the storage section and the control section are connected together via a data transfer bus line,
an image compression/decompression section for compressing/decompressing the image data is provided within or adjacent to the image input/display apparatus,
the control section controls the image compression/decompression section to compress non-compressed image data input from the image input section, transfers the compressed image data via the data transfer bus line to the storage section, and controls the storage section to store the compressed image data, and
the control section transfers compressed image data stored in the storage section via the data transfer bus line to the image compression/decompression section, controls the image compression/decompression section to decompress the compressed image data, and controls the image display section to display/replay the decompressed image data.

6. An image information processing system, comprising:
an image input/display apparatus including:
an image input section for receiving image data; and
an image display section for displaying the image data; and
a control section for controlling the image input section and the image display section,
wherein an image compression/decompression section for compressing/decompressing the image data is provided within or adjacent to the image input/display apparatus, and
the control section controls the image compression/decompression section to compress/decompress non-compressed image data input from the image input section and controls the image display section to perform monitor display of the image data.

7. An image information processing system according to claim 6, wherein a size of the image data input from the image input section is shaped by compression and decompression of the image data by the image compression/decompression section to fit a display size of the image display section.

8. An image information processing system according to claim 5 or 6, wherein the image compression/decompression section has a compression rate predetermined depending on a data transfer rate.

9. An image information processing system, comprising:
a storage section for storing an image data;
an image display section for displaying the image data;
a communication section for transmitting/receiving the image data; and
a control section for controlling the storage section, the image display section and the communication section,
wherein the storage section, the image display section, the communication section and the control section are connected together via a data transfer bus line,
an image decompression section for decompressing compressed image data is provided within or adjacent to the image display section, and
the control section controls the storage section to store compressed image data received by the communication section, transfers the compressed image data stored in the storage section via the data transfer bus line to the image decompression section, controls the image decompression section to decompress the compressed image data, and controls the image display section to display/replay the decompressed image data.

10. An image information processing system, comprising:
a storage section for storing an image data;
an image display section for displaying the image data;
a communication section for transmitting/receiving the image data; and
a control section for controlling the storage section, the image display section and the communication section,
wherein the storage section, the image display section, the communication section and the control section are connected together via a data transfer bus line,
an image decompression section for decompressing compressed image data is provided within or adjacent to the image display section, and
the control section controls the storage section to store compressed image data received by the communication section, and at the same time, transfers the compressed image data, without storing the compressed image data into the storage section, via the data transfer bus line to the image decompression section, controls the image decompression section to decompress the compressed image data, and controls the image display section to display/replay the decompressed image data.

11. An image information processing system according to claim 1 or 3, wherein the image compression section performs image compression based on an image compression algorithm requiring a circuit scale or program size smaller than a predetermined one.

12. An image information processing system according to any one of claims 2, 3, 9 and 10, wherein the image decompression section performs image decompression based on an image decompression algorithm requiring a circuit scale or program size smaller than a predetermined one.

13. An image information processing system according to claim 5 or 6, wherein the image compression/decompression section performs image compression/decompression based on an image compression/decompression algorithm requiring a circuit scale or program size smaller than a predetermined one.

14. An image information processing system according to any one of claims 1, 3 and 11, wherein the image compression section includes two or more image compression sections having different image compression algorithms.

15. An image information processing system according to any one of claims 2, 3, 9 and 10, wherein the image decompression section includes two or more image decompression sections having different image decompression algorithms.

16. An image information processing system according to claim 5 or 6, wherein the image compression/decompression section includes two or more image compression/decompression sections having different image compression/decompression algorithms.

17. An image information processing method for an image information processing system, wherein the image information processing system comprises:
an image input section for receiving image data;
a storage section for storing the image data; and
a control section for controlling the image input section and the storage section,
wherein the image input section, the storage section and the control section are connected together via a data transfer bus line, and
an image compression section for compressing the image data is provided within or adjacent to the image input section,
the method comprising:
using the control section to control the image compression section to compress non-compressed image data input from the image input section, transfer the compressed image data via the data transfer bus line to the storage section, and control the storage section to store the compressed image data.

18. An image information processing method for an image information processing system, wherein the image information processing system comprises:
a storage section for storing image data;
an image display section for displaying the image data; and
a control section for controlling the storage section and the image display section,
wherein the storage section, the image display section and the control section are connected together via a data transfer bus line, and
an image decompression section for decompressing compressed image data is provided within or adjacent to the image display section,
the method comprising:
using the control section to transfer compressed image data stored in the storage section via the data transfer bus line to the image decompression section, control the image decompression section to decompress the compressed image data, and control the image display section to display/replay the decompressed image data.

19. An image information processing method for an image information processing system, wherein the image information processing system comprises:
an image input section for receiving image data;
a storage section for storing the image data;
an image display section for displaying the image data; and
a control section for controlling the image input section, the storage section and the image display section,
wherein the image input section, the storage section, the image display section and the control section are connected together via a data transfer bus line,
an image compression section for compressing the image data is provided within or adjacent to the image input section, and
an image decompression section for decompressing compressed image data is provided within or adjacent to the image display section,
the method comprising:
using the control section to control the image compression section to compress non-compressed image data input from the image input section, transfer the compressed image data via the data transfer bus line to the storage section, and control the storage section to store the compressed image data, and
using the control section to transfer compressed image data stored in the storage section via the data transfer bus line to the image decompression section, control the image decompression section to decompress the compressed image data, and control the image display section to display/replay the decompressed image data.

20. An image information processing method for an image information processing system, wherein the image information processing system comprises:
an image input/display apparatus including:
an image input section for receiving image data; and
an image display section for displaying the image data;
a storage section for storing the image data; and
a control section for controlling the image input section, the image display section and the storage section,
wherein the image input/display apparatus, the storage section and the control section are connected together via a data transfer bus line,
an image compression/decompression section for compressing/decompressing the image data is provided within or adjacent to the image input/display apparatus,
the method comprising:
using the control section to control the image compression/decompression section to compress non-compressed image data input from the image input section, transfer the compressed image data via the data transfer bus line to the storage section, and control the storage section to store the compressed image data; and
using the control section to transfer the compressed image data stored in the storage section via the data transfer bus line to the image compression/decompression section, control the image compression/decompression section to decompress the compressed image data, and control the image display section to display/replay the decompressed image data.

21. An image information processing method for an image information processing system, wherein the image information processing system comprises:
an image input/display apparatus including:
an image input section for receiving image data; and
an image display section for displaying the image data; and
a control section for controlling the image input section and the image display section,
wherein an image compression/decompression section for compressing/decompressing the image data is provided within or adjacent to the image input section,
the method comprising:
using the control section to control the image compression/decompression section to compress /decompress non-compressed image data input from the image input section and control the image display section to perform monitor display of the image data.

22. An image information processing method for an image information processing system, wherein the image information processing system comprises:
a storage section for storing an image data;
an image display section for displaying the image data;
a communication section for transmitting/receiving the image data; and
a control section for controlling the storage section, the image display section and the communication section,
wherein the storage section, the image display section, the communication section and the control section are connected together via a data transfer bus line, and
an image decompression section for decompressing compressed image data is provided within or adjacent to the image display section,
the method comprising:
using the control section to control the storage section to store compressed image data received by the communication section, transfer the compressed image data stored in the storage section via the data transfer bus line to the image decompression section, control the image decompression section to decompress the compressed image data, and control the image display section to display/replay the decompressed image data.

23. An image information processing method for an image information processing system, wherein the image information processing system comprises:
a storage section for storing an image data;
an image display section for displaying the image data;
a communication section for transmitting/receiving the image data; and
a control section for controlling the storage section, the image display section and the communication section,
wherein the storage section, the image display section, the communication section and the control section are connected together via a data transfer bus line, and
an image decompression section for decompressing compressed image data is provided within or adjacent to the image display section,
the method comprising:
using the control section to control the storage section to store compressed image data received by the communication section, and at the same time, transfer the compressed image data, without storing the compressed image data into the storage section, via the data transfer bus line to the image decompression section, control the image decompression section to decompress the compressed image data, and control the image display section to display/replay the decompressed image data.
